# EUROPÄISCHE PATENTSCHRIFT

(11) **EP 0 685 068 B1**
(45) Veröffentlichungstag und Bekanntmachung des Hinweises auf die Patenterteilung: **16.04.1997**
(21) Anmeldenummer: 94906869.6
(22) Anmeldetag: 14.02.1994
(51) Int. Cl.: G01N 29/04, G01N 29/10

(54) **ULTRASCHALL-PRÜFVORRICHTUNG FÜR SCHWEISSNÄHTE BEI ROHREN, BLECHEN UND BEHÄLTERN**
ULTRASONIC TESTING DEVICE FOR WELD SEAMS IN PIPES, SHEETS AND CONTAINERS
DISPOSITIF ULTRASONORE PERMETTANT DE VERIFIER DES SOUDURES EFFECTUEES SUR DES TUYAUX, DES TOLES ET DES CONTENANTS

(30) Priorität: 18.02.1993 DE 4304952
(43) Veröffentlichungstag der Anmeldung: 06.12.1995
(73) Patentinhaber: KRAUTKRÄMER GmbH & Co., D-50354 Hürth (DE); F.H. Gottfeld Gesellschaft für Zerstörungsfreie Werkstoffprüfung mbH, D-44653 Herne (DE)
(72) Erfinder: GÜNTHER, Werner, D-50259 Pulheim (DE); KARBACH, Bernhard, D-50374 Erftstadt-Friesenheim (DE); HECKHÄUSER, Helmut, D-44653 Herne (DE); SCHULZ, Siegmar, D-50935 Köln (DE)
(74) Vertreter: Bauer, Wulf, Dr.
(86) Internationale Anmeldenummer: DE9400151
(87) Internationale Veröffentlichungsnummer: WO9419686

(56) Entgegenhaltungen:
- EP-A- 0 235 030
- US-A- 3 868 847
- US-A- 3 888 114
- US-A- 4 351 190
- US-A- 4 570 487

## Beschreibung

Die Erfindung bezieht sich auf eine Ultraschall-Prüfvorrichtung nach dem Oberbegriff des Patentanspruchs 1.

Eine derartige Ultraschall-Prüfvorrichtung ist aus der DE 4030893 Al vorbekannt. Bei ihr werden zwei Winkelprüfköpfe über Spaltankopplung an das Grundmaterial links und rechts der Schweißnaht angekoppelt, und es wird in wechselseitiger Beschallung gemessen.

US-A-4,570,487 zeigt ein Verfahren zur Beurteilung vcn Bruchstellen in bimetallischen, grobkörnigen Werkstücken. Dabei wird von einem sendenden Ultraschallwandler so in das zu untersuchende Werkstück eingeschallt, daß sich auf der dem Ultraschallwandler gegenüberliegenden Fläche des Werkstücks eine Oberflächenwelle ausbildet. Diese wird an der Bruchstelle, sofern diese bis zur Oberfläche reicht, wieder in eine Volumenwelle umgewandelt und durch einen empfangenden Ultraschallsensor aufgenommen. Bei dieser Prüfung kann eine in der Nähe der Bruchstelle liegende Schweißnaht mechanisch stören, wenn sie aufgrund einer oberflächlichen Verformung die Bewegung des Prüfkopfes behindert.

US-A-3,868,847 bezieht sich auf ein Verfahren und eine Vorrichtung zur Ultraschallprüfung länglicher Schweißnähte mit mittiger Wurzellage und bei Spaltankopplung.

Im DE-Buch "Werkstoffprüfung mit Ultraschall", 1980, 475 bis 477, 490 bis 500 ist die Verwendung von Oberflächenwellen bei widerstandsgeschweißten Stahlrohren angesprochen. Ob tatsächlich Oberflächenwellen vorliegen, oder aber Plattenwellen, wird in der Literaturstelle bezweifelt.

Mit der vorbekannten Prüfvorrichtung der eingangs genannten Art läßt sich jedoch nur jeweils ein Teilbereich der schweißnaht erfassen, es sei denn, die beiden Prüfkopfträger werden synchron quer zur Schweißnaht so hin- und herbewegt, daß eine vollständige Durchschallung der gesamten Schweißnaht erzielt wird. Nicht nur bei einer derartigen, manuell ausgeführten Prüfung, sondern auch beim Einsatz von mechanischen Bewegungsvorrichtungen gestaltet sich einerseits die Synchronisation der beiden Bewegungen sehr schwierig, andererseits ist die Deutung von Echoanzeigen, insbesondere die Differenzierung zwischen Flanken- und Wurzelanzeigen, erschwert, weil die Fehlersignale über ständig wechselnde Einschallpunkte gewonnen werden. Eine automatische Prüfung ist mit dieser vorbekannten Prüfvorrichtung daher nur schwierig zu realisieren.

Hier setzt nun die Erfindung ein. Sie hat es sich zur Aufgabe gemacht, die Prüfvorrichtung der eingangs genannten Art dahingehend weiterzubilden, daß ohne Relativbewegung der Prüfkopfträger quer zur Schweißnaht einerseits der gesamte Querschnitt der Schweißnäht mit ausreichender Empfindlichkeit erfaßt werden kann und andererseits zwischen Binde- und Wurzelfehlern differenziert werden kann, sowie die Möglichkeit gegeben ist, Fehlerechos von Formechos zu trennen.

Gelöst wird diese Aufgabe ausgehend von der Prüfvorrichtung der eingangs genannten Art durch eine Vorrichtung gemäß Anspruch 1.

Durch diese Lösung werden Relativbewegungen der Prüfkopfträger quer zur Schweißnaht nicht mehr benötigt. Eine grobe Ausrichtung der Prüfköpfe zur geometrischen Nahtmitte ist ausreichend. Dadurch reduziert sich der mechanische Bewegungsaufwand auf eine Achse und automatische Prüfsysteme lassen sich einfacher und reproduzierbarer realisieren. Lediglich bei Auswanderung der kompletten Naht erfolgt eine Nachführung des gesamten Prüfsystems.

Es genügt für eine Prüfung, die Prüfkopfträger gemeinsam bei im wesentlichen mittig zwischen ihnen befindlicher Schweißnaht parallel zum Verlauf der Schweißnaht zu verschieben. Dadurch eignet sich die erfindungsgemäße Vorrichtung wesentlich besser für automatisch arbeitende Prüfvorrichtungen.

Erfindungsgemäß wird mit unterschiedlichen Wellenformen gearbeitet, um die Wurzellage der Schweißnaht besser und sicherer erfaßen zu können. Durch den für Kriechwellenprüfung eingerichteten Tauchtechnikprüfkopf jedes Prüfkopfträgers wird die Wurzellage in oberflächennahen Bereichen geprüft. Durch den Prüfkopf für Längsfehlerprüfung, der die Schweißnaht im Bereich der Wurzellage durchschallt, werden mögliche Reflektoren zusätlich nachgewiesen und wird zusätzlich auch der unmittelbar an diese durch Kriechwellen erfolgte Prüfung anschließende Bereich geprüft. Dabei bietet sich für eine sichere Aussage über Fehler eine Kombination beider Prüfergebnisse in einer Weiterbildung an.

Anstelle der Winkelprüfköpfe mit Spaltankopplung nach dem Stand der Technik werden Tauchtechnikprüfköpfe eingesetzt, sie haben ein höheres Auflösungsvermögen. Weiterhin läßt sich eine gleichmäßigere Schallfeldverteilung im Material realisieren.

Da die einzelnen Tauchtechnikprüfköpfe so eng, wie es die Prüfungsaufgabe zuläßt, nebeneinander angeordnet sind und dadurch ihre Schalleintrittsbereiche so nahe wie möglich nebeneinander liegen, ist einerseits die Ankopplung über eine Wasser-Vorlaufstrecke relativ einfach durchzuführen und andererseits reicht es für die Praxis aus, die ordnungsgemäße Ankopplung nur eines Tauchtechnikprüfkopfes in einem speziellen Meßtakt zu überwachen. Wenn dieser Prüfkopf ordnungsgemäß angekoppelt ist, kann davon ausgegangen werden, daß auch die anderen Prüfköpfe ordnungsgemäß über die Wasser-Vorlaufstrecke angekoppelt sind. Hierdurch vereinfacht sich die Prüfelektronik erheblich. Für die Ankopplung ist nur ein gemeinsamer Koppelwasseranschlup notwendig.

Die zumindest zwei weiteren Prüfköpfe für Längsfehlerprüfung sind parallel zueinander ausgerichtet. Dadurch werden im Grundmaterial zumindest zwei parallel zueinander verlaufende Schallstrekken vorgegeben, die an unterschiedlichen Stellen durch die Schweipnaht hindurchtreten.

In einer vorzugsweisen Weiterbildung ist zusätzlich pro Prüfkopfträger mindestens ein Tauchtechnikprüfkopf für Querfehlerprüfung vorgesehen und so angeordnet, daß sein Schalleintrittsbereich in das Grundmaterial so weit wie möglich mit den Schalleintrittsbereichen der anderen Prüfköpfe zusammenfällt. Bei dieser Anordnung befindet sich zwar der Prüfbereich für die Querfehlerprüfung an anderer Stelle der Schweißnaht als eine gleichzeitig erfolgende Prüfung auf Längsfehler, da die Abweichung aber bekannt ist, wird die Prüfung hierdurch nicht erschwert. Man gewinnt aber den Vorteil, daß die Ankopplung über die Wasser-Vorlaufstrecke nicht separat überwacht werden muß.

In vorzugsweiser Weiterbildung sind die Prüfköpfe für die Längsfehler auf einer Linie nebeneinander oder hintereinander angeordnet. Diese Linie kann somit vorzugsweise parallel zur Schweißnaht verlaufen, sie kann aber auch quer zu ihr liegen.

Als besonders vorteilhaft hat sich erwiesen, wenn die vom Kriechwellen-Prüfkopf angezeigten Fehler nur dann bei der Auswertung berücksichtigt werden, wenn der die Wurzellage durchschallende Längsfehler-Prüfkopf am gleichen Ort auch einen Fehler anzeigt. Bekanntlich ist die Schallintensität von Kriechwellen von vielen Faktoren abhängig und kann von Ort zu Ort variieren. Um sicher zu sein, daß nicht durch eine zu schwach ausgebildete Kriechwelle ein Fehler vorgetäuscht wird, erfolgt die Bezugnahme auf das Signal des nächstgelegenen Längsfehler-Prüfkopfes. Dadurch wird eine sichere Aussage über Fehler möglich. Unter Fehlern werden Schallungänzen, also Hindernisse jeglicher Art in der normalen Schallausbreitung, verstanden.

Schließlich hat es sich als vorteilhaft erwiesen, neben den Amplituden bei Durchschallung und im Reflexionsbetrieb auch die zugehörigen Laufzeiten zu erfassen, sie werden zur Bestimmung der Fehlerlage herangezogen und erlauben damit eine weitere Differenzierung von Fehleranzeigen.

In einer Weiterbildung werden die Laufzeiten der Formechos der Wurzel ausgewertet, um Prüfkopfsysteme dem Wurzelverlauf nachzuführen.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. In dieser Zeichnung zeigen:
- Fig.1: eine Prinzipdarstellung in Seitenansicht eines linken und eines rechten Prüfkopfträgers mit jeweils fünf (bzw. sechs) Prüfköpfen sowie einer Schweißnaht mit angrenzenden Grundmaterialbereichen und den zentralen Schallstrahlen,
- Fig. 2: eine Draufsicht auf die Anordnung gemäß Fig. 1
- Fig. 3: eine Darstellung ähnlich Fig. 1 für eine andere Anordnung von Prüfköpfen in je einem Prüfkopfträger, und
- Fig. 4: eine Darstellung entsprechend Fig. 2 für die Ausführung nach Fig. 3.

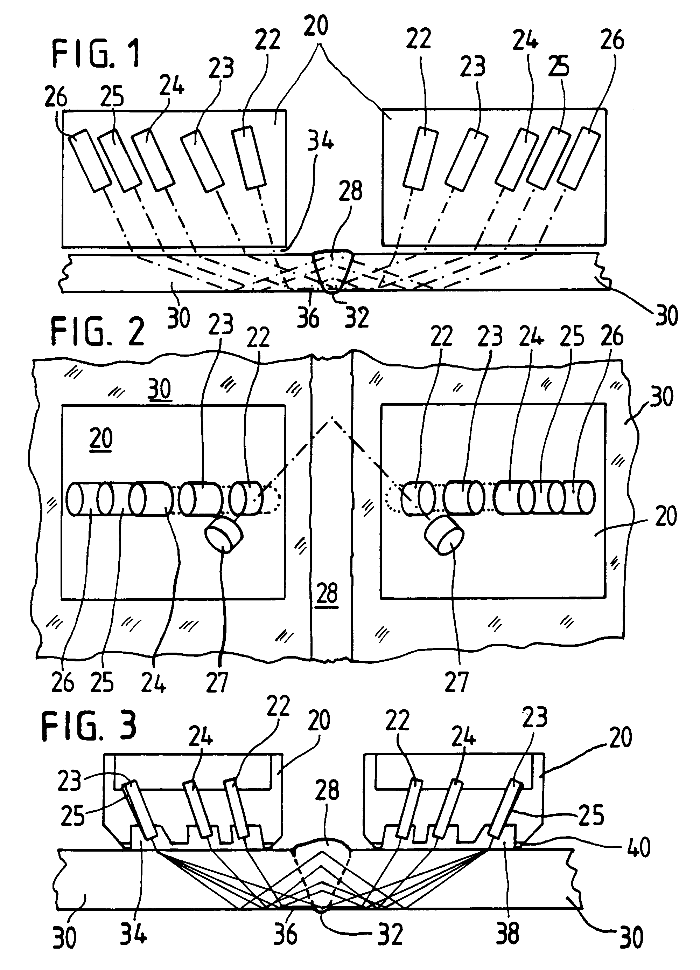

Das erste Ausführungsbeispiel nach den Fig. 1 und 2 zeigt schematisch zwei baugleiche, nicht näher in ihrer Konstruktion spezifizierte Prüfkopfträger 20, in denen jeweils fünf Prüfköpfe 22-26 angeordnet sind. Die beiden Prüfkopfträger 20 sind spiegelbildlich zu einer Schweißnaht 28 angeordnet, die sich rechtwinklig zur Papierebene erstreckt. An sie grenzen links und rechts Bereiche des Grundmaterials 30 an. Die Schweißnaht 28 ist ist typischerweise durch Auftragen mehrerer Schweißlagen erstellt, beginnend mit einer Wurzellage 32. Üblicherweise Fall hat sie einen im wesentlichen V-förmigen Querschnitt, wie dies Fig. 1 zeigt. Mit der Prüfvorrichtung soll eine vollständige Prüfung der gesamten Querschnittsfläche der Schweißnaht 28 durchgeführt werden, damit soll auch der Bereich an der V-Spitze dieser Querschnittsfläche sicher erfaßt werden. In diesem Bereich ist die Prüfung schwierig und wird häufig durch Formechos gestört. In diesem Bereich treten bevorzugt Fehlstellen auf.

Die einzelnen Prüfköpfe 22-26 sind Tauchtechnik-Prüfköpfe, sie sind über eine Wasser-Vorlaufstrecke 34 akustisch an das Grundmaterial 30 angekoppelt, wie durch die einzelnen Zentralstrahlen, die in Fig. 1 eingezeichnet sind, angedeutet ist.

Der Schweißnaht 28 am nächsten liegt der Prüfkopf 22, er dient der Erzeugung indirekter (sekundärer) Kriechwellen, also der Erzeugung von Kriechwellen auf der Seite der Wurzellage 32 der Schweißnaht 28. Hierzu schallt er näher der Schweißnaht 28 und in einem steileren Winkel in das Grundmaterial 30 ein als die weiteren Prüfköpfe 23-26. Der Prüfkopf 22 ist in einer genau definierten Entfernung von der Schweißnaht 28 angeordnet, so daß sein Einschallbereich eine vorgegebene Entfernung (z. B. etwa 20 mm) von dieser hat. Wie die Fig. 1 zeigt, wird in Nähe der Wurzellage 32 eine Kriechwelle 36 erzeugt, die sich oberflächlich ausbreitet und die Schweißnaht 28 im Bereich ihrer Wurzellage oberflächlich durchschallt. Sie wird in symmetrischer Anordnung aufgenommen durch einen entsprechenden Prüfkopf 22 im rechten Prüfkopfträger 20. Der Schallweg ist etwa U-förmig. In einem anderen Meßtakt kann dieser Prüfkopf 22 des rechten Prüfkopfträgers 20 als Sender und der Prüfkopf 22 des linken Prüfkopfträgers 20 als Empfänger geschaltet sein.

In Nähe des Prüfkopfes 22 befindet sich ein erster Prüfkopf 23 für Längsfehlerprüfung. Sein Einschallbereich in das Grundmaterial 30 liegt in unmittelbarer Nähe des Einschallbereichs des Prüfkopfes 22. Aufgrund des flacheren Einschallwinkels und der größeren Entfernung von der Schweißnaht 28 wird ein im wesentlichen V-förmiger Schallweg im Grundmaterial 30 und der dazwischen liegenden Schweißnaht 28 erreicht, wie dies in Fig. 1 gezeigt ist. Der Schallweg verläuft dabei so nahe wie möglich der V-Spitze des Querschnitts der Schweißnaht 28. Dadurch wird die Wurzellage 32 erfaßt. Die Prüfung findet damit in Nähe der Prüfung statt, die durch die sekundäre Kriechwelle der beiden Prüfköpfe 22 durchgeführt wird. Durch Korrelation der Ergebnisse der Prüfkopfpaare 22, 23 wird eine deutlich sicherere Aussage über Fehler im Bereich der Wurzellage 32 erreicht, als dies nach dem Stand der Technik möglich ist.

Die Prüfkopfträger 20 beider Seiten haben noch drei weitere Längsfehlerprüfköpfe 24-26 sowie (Fig. 2) zusätzlich noch einen Prüfkopf 27 für Querfehler. In der gezeigten Ausführung stehen die Prüfköpfe 24-26 parallel zum Prüfkopf 23 und sind in Reihe hintereinander mit diesem angeordnet, wobei die reihenförmige Anordnung quer zur Längsrichtung der Schweißnaht 28 ausgerichtet ist. Dadurch werden für die Prüfköpfe 24-26 im wesentlichen W-förmige Schallstrecken im Grundmaterial 30 und der dazwischen liegenden Schweißnaht 28 erreicht, die Schweißnaht 28 wird dadurch bereichsweise über ihren gesamten Querschnitt geprüft.

Der zusätzlich vorgesehene Prüfkopf 27 für Querfehler ist so angeordnet, daß er durch dieselbe Wasser-Vorlaufstrecke 34 einschallt, wie die bisher besprochenen Prüfköpfe 22-26. Dadurch kann die Wasser-Vorlauf strecke räumlich sehr klein gewählt werden, dies ist insbesondere aus Fig. 2 ersichtlich, wo sie in punktierter Darstellung eingezeichnet ist.

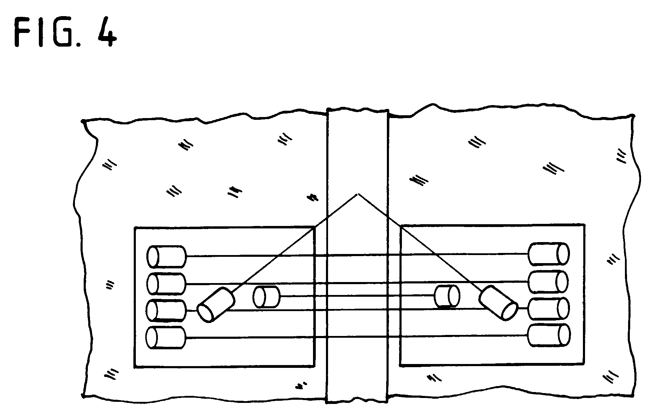

Das in den Fig. 3 und 4 dargestellte zweite Ausführungsbeispiel unterscheidet sich vom ersten Ausführungsbeispiel im wesentlichen durch die Anordnung der Prüfköpfe 23-26 für die Längsfehlerprüfung. Sie sind nebeneinander auf einer Linie angeordnet, die parallel zur Längsrichtung der Schweißnaht 28 verläuft. Der Prüfkopfträger 20 bildet Kammern 38 für die Ausbildung der Wasser-Vorlaufstrecke 34 aus, insgesamt sind es drei Kammern 38 pro Prüfkopfträger 20. Die Kammern 38 sind untereinander in Verbindung und werden durch einen gemeinsamen, zentralen Anschluß (nicht dargestellt) mit Ankopplungsflüssigkeit versorgt. Wie Fig. 3 zeigt, haben die Prüfköpfe 23-26 eine geringfügig unterschiedliche Neigung im Vergleich miteinander, dies führt zu geringfügig unterschiedlichen Einfallwinkeln und zu den dargestellten Unterschieden in den Ausfallwinkeln.

In vorzugsweiser Ausbildung können die Prüfköpfe 23-26 im Prüfkopfträgerwinkel räumlich eingestellt werden, dadurch läßt sich der Prüfkopfträger 20 an die jeweilige Prüfaufgabe, insbesondere die Dicke des Grundmaterials 30, anpassen.

Um die Kammern sind Gleitschuhe 40 gelegt, die einen seitlichen Austritt der Ankopplungsflüssigkeit behindern, dadurch wird erheblich Ankopplungsflüssigkeit gespart. Als derartige Gleitschuhe 40 oder seitliche Abschlüsse kommen ringartige Gummilippen, Rahmen aus Kunststoffen oder Metallen etc. in Frage.

Der annähernd gemeinsame Einschallpunkt der senkrecht und im Winkel einschallenden Prüfköpfe innerhalb einer Wasserkammer ermöglicht zusätzlich die Kontrolle der Ankopplungsgüte durch Rückwandüberwachung der senkrecht einschallenden Prüfköpfe.

Die Laufzeitinformationen der Wurzellage kann zur Regelung der Lage der Prüfkopfsysteme parallel zur Wurzel ausgewertet und benutzt werden. Durch eine elektronische Verknüpfung des Blendenbereichs an das Eintrittsecho können Abstandsänderungen im Wasservorlauf ausgeglichen werden. Die Prüfkopfsysteme sind quer zur Naht mechanisch verfahrbar, um dem Nahtverlauf folgen zu können. Das Steuersignal hierfür wird entweder über einen Nahtdetektionssensor oder über die Laufzeitinformationen der Wurzellage bereitgestellt.

## Patentansprüche

1. Ultraschall-Prüfvorrichtung für Unterpulver-Schweißnähte (28) bei Rohren und Blechen, vorzugsweise für Rundumnähte von Pipeline-Rohren, mit einer Prüfelektronik und zwei baugleichen, spiegelbildlich zur Schweißnaht angeordneten, jeweils mindestens einen Prüfkopf (z.B. 23) aufweisenden Prüfkopfträgern (20), die vom Grundmaterial (30) der Rohre oder Bleche seitlich in die Schweißnaht (28) einschallen und auf der der Wurzellage (32) der Schweißnaht (28) gegenüberliegenden Fläche des Grundmaterials (30) angekoppelt sind, dadurch gekennzeichnet, daß jeder Prüfkopfträger (20) mehrere Tauchtechnikprüfköpfe (22-24) aufweist, die quer zur Schweißnaht (28) wirkend so hintereinander oder nebeneinander angeordnet sind, daß ihre Schalleintrittsbereiche in das Grundmaterial (30) so nahe wie möglich zusammenliegen und von denen a) ein Tauchtechnikprüfkopf (22) so ausgerichtet und so als Sender geschaltet ist, daß er im Grundmaterial (30) auf der Seite der Wurzellage (32) der Schweißnaht (28) eine Kriechwelle (36) erzeugt, die sich oberflächlich ausbreitet, die Schweißnaht (28) im Bereich ihrer Wurzellage (32) oberflächlich durchschallt und in symmetrischer Anordnung durch einen entsprechenden, als Empfänger geschalteten Prüfkopf (22) des gegenüberliegenden Prüfkopfträgers (20) aufgenommen wird, und von denen b) zumindest zwei weitere Tauchtechnikprüfköpfe (23, 24) für Längsfehlerprüfung in einem flacheren Winkel als der erstgenannte Tauchtechnikprüfkopf (22) einschallen, wobei einer dieser Tauchtechnikprüfköpfe (23) für Längsfehler die Schweißnaht (28) im Bereich der Wurzellage (32) durchschallt.

2. Ultraschall-Prüfvorrichtung nach Anspruch 1, dadurch gekennzeichnet, daß die Prüfköpfe (22-27) lösbar im Prüfkopfträger (20) befestigt sind.

3. Ultraschall-Prüfvorrichtung nach Anspruch 1 und 2, dadurch gekennzeichnet, daß die Prüfköpfe (22-27) winkeleinstellbar im Prüfkopfträger (20) angeordnet sind.

4. Ultraschall-Prüfvorrichtung nach einem der Ansprüche 1 bis 3, dadurch gekennzeichnet, daß mehr als drei Prüfköpfe (23 - 26) für die Längsfehlerprüfung vorgesehen sind.

5. Ultraschall-Prüfvorrichtung nach Anspruch 4, dadurch gekennzeichnet, daß die Prüfköpfe (23-26) für die Längsfehlerprüfung in einer Reihe angeordnet sind, die vorzugsweise parallel zum Verlauf der Schweißnaht (28) oder quer zu dieser ausgerichtet ist.

6. Ultraschall-Prüfvorrichtung nach einem der Ansprüche 1 bis 5, dadurch gekennzeichnet, daß jeder Prüfkopfträger (20) zumindest einen zusätzlichen Prüfkopf (27) in Form eines TauchtechnikPrüfkopfes und ausgelegt für Querfehler aufweist.

7. Ultraschall-Prüfvorrichtung nach einem der Ansprüche 1 bis 6, dadurch gekennzeichnet, daß zumindest ein zusätzlicher Prüfkopf (27) vorgesehen ist, der neben der Schweißnaht (28) senkrecht in das Grundmaterial (30) einschallt.

8. Ultraschall-Prüfvorrichtung nach einem der Ansprüche 1 bis 7, dadurch gekennzeichnet, daß den einzelnen Prüfköpfen (22-27) Kammern (38) für eine Wasser-Vorlaufstrecke (34) zugeordnet sind und diese Kammern (38) untereinander in Verbindung stehen.

9. Ultraschall-Prüfvorrichtung nach Anspruch 8, dadurch gekennzeichnet, daß die Kammern (38) mit einer gemeinsamen Zuleitung für eine Ankopplungsflüssigkeit verbunden sind.

10. Ultraschall-Prüfvorrichtung nach einem der Ansprüche 1 bis 9, dadurch gekennzeichnet, daß die Kammern (38) seitlich von Gleitschuhen (40) zur Verringerung des seitlichen Wasserverlustes umringt sind.

11. Ultraschall-Prüfvorrichtung nach einem der Ansprüche 1 bis 10, dadurch gekennzeichnet, daß die Prüfköpfe (22-27) wahlweise als Sende- oder als Empfangsprüfköpfe betreibbar sind.

12. Ultraschall-Prüfvorrichtung nach einem der Ansprüche 1 bis 11, dadurch gekennzeichnet, daß ein von dem Prüfkopf (22) für Kriechwellen angezeigter Reflektor nur dann bei der Auswertung berücksichtigt wird, wenn der Prüfkopf (23) für die Durchschallung der Wurzellage (32) oder eine andere Prüfkopfkombination auch ein Signal liefert.

## Claims

1. Ultrasonic testing device for submerged arc weld seams (28) in pipes and metal sheets and containers, preferably panoramic lines of pipeline-pipes, with a testing electronics and two inspection head supports (20) of the same construction, specularly arranged to the weld seam, showing at least one inspection head each (i.e. 23), which send sound sideways from the base material (30) of the pipes and metal sheets into the weld seam (28) and are coupled on the surface of the base material (30), positioned opposite of the root position (32) of the weld seam (28) characterized by each inspection head support (20) showing several immersion-technique inspection heads (22-24), which are arranged acting diagonally to the weld line (28) behind or side by side in such a way, that their points of sound entrance into the base material (30) are as closely together as possible and that one of the a) immersion-technique inspection heads (22) is oriented in such a way and operated as a transmitter in such a way, that it produces a creep wave (36) in the base material (30) on the side of the root (32) of the weld line (28), expanding on the surface and propagating through the weld seam in the area of its root and being received in symmetrical arrangement by an equivalent inspection head (22) of the opposed inspection head support (20), which inspection head is operated as an receiver and of which b) at least two further immersion technique inspection heads (23,24) for longitudinal error testing emit sound in a flatter angle than the first mentioned immersion technique inspection head (22), where one of these immersion technique inspection heads (23) for longitudinal errors sends acoustic irradiation through the weld line (28) in the area of the root (32).

2. Ultrasonic inspection system according to claim 1 characterized by the inspection heads (22-27) being secured in the inspection head support (20) detachably.

3. Ultrasonic inspection system according to claim 1 and 2 characterized by the inspection heads (22-27) being arranged angle-adjustably in the inspection head support (20).

4. Ultrasonic inspection system according to one of the claims 1 to 3 characterized by more than three inspection heads (23-26) being planned for longitudinal error testing.

5. Ultrasonic inspection system according to claim 4 characterized by the inspection heads (23-26) for longitudinal error testing being arranged in one line, which is projected preferably parallel to the course of the weld line (28) or diagonal to it.

6. Ultrasonicc inspection system according to one of the claims 1 to 5 characterized by each inspection head support (29) showing at least one additional inpection head (27) in the shape of an immersion technique inspection head and being designed for diagonal errors.

7. Ultrasound inspection system according to one of the claims 1 to 6 characterized by at least one additional inspection head (27) being planned, which sends waves next to the weld line (28) vertically into the base material (30).

8. Ultrasonic inspection system according to one of the claims 1 to 7 characterized by chambers (38) for a water-flowing distance being assigned to the individual inspection heads (22-27) and those chambers (38) being in connection with each other.

9. Ultrasonic inspection system according to claim 8 characterized by the chambers (38) being connected with a mutual delivery pipe for a coupling fluid.

10. Ultrasonic inspection system according to one of the claims 1 to 9 characterized by the chambers (38) being surrounded sideways by recoilguide shoes (40) for the reduction of the side water loss.

11. Ultrasound inspection system according to one of the claims 1 to 10 characterized by the inspection heads (22-27) being operated optionally as sending or receiving inspection heads.

12. Ultrasound inspection system accoprding to one of the claims 1 to 11 characterized by a reflector, indicated by the inspection head (22) for creep waves, being taken into account for the evaluation only when the inspection head (23) sends a signal also for the acoustic irradiation through the root position (32) or another inspection head combination.

## Revendications

1. Dispositif ultrasonore de vérification de soudures à l'arc sous flux solide (28) sur des tuyaux et tôles, de préférence de joints circulaires de tuyaux de pipeline, comportant une électronique de vérification ainsi que deux supports de palpeurs (20) de construction identique arrangés à symétrie spéculaire par rapport à la soudure et présentant respectivement un palpeur (par exemple 23) du moins, qui, du matérieau de base (30) des tuyaux ou tôles, émettent des sons latéralement dans la soudure (28) et sont couplés sur la surface du matériau de base (30), qui est disposée en face de la couche de racine (32) de la soudure (28), caractérisé par le fait que chacun des supports de palpeurs (20) présente plusieurs palpeurs de techinque d'immersion (22 - 24) qui - agissant transversalement à la soudure (28) - sont disposés l'un derrière l'autre ou l'un à côté de l'autre de telle manière que leur zones d'entrée acoustiques dans le matériau de base (30) sont aussi proches que possible l'une de l'autre et dont a) un palpeur de technique d'immersion (22) est orienté de telle façon et est opéré en tant que transmetteur de telle manière qu'il génère une onde de surface (36) dans le matériau de base (30) du côté de la couche de racine (32) de la soudure (28), qui se propage sur la surface, se propage de façon superficielle au travers de la soudure (28) dans la zone de sa couche de racine (32) et est reçue en arrangement symétrique par un palpeur (22) correspondant du support opposé de palpeurs (20), ledit palpeur (22) étant opéré en tant que récepteur, et dont b) du moins deux autres palpeurs de technique d'immersion (23, 24) pour la vérification d'erreurs longitudinales émettent des sons à un angle plus plan que le palpeur de technique d'immersion (22) premièrement mentionné, l'un de ces palpeurs de technique d'immersion (23) pour erreurs longitudinales émettant des sons au travers de la soudure (28) dans la zone de la couche de racine (32).

2. Dispositif ultrasonore de vérification selon la revendication 1, caractérisé par le fait que les palpeurs (22 - 27) sont fixés de manière amovible dans le support de palpeurs (20).

3. Dispositif ultrasonore de vérification selon les revendications 1 et 2, caractérisé par le fait que les palpeurs (22 - 27) sont disposés de façon à être angulairement ajustable dans le support de palpeurs (20).

4. Dispositif ultrasonore de vérification selon l'une des revendications 1 à 3, caractérisé par le fait que plus de trois palpeurs (23 - 26) sont prévus pour la vérification d'erreurs longitudinales.

5. Dispositif ultrasonore de vérification selon la revendication 4, caractérisé par le fait que les palpeurs (23 - 26) pour la vérification d'erreurs longitudinales sont disposés à la ligne, cette ligne étant, de préférence, orientée parallèlement au tracé de la soudure (28) ou transversalement à cette dernière.

6. Dispositif ultrasonore de vérification selon l'une des revendications 1 à 5, caractérisé par le fait que chacun des supports de palpeurs (20) présente du moins un palpeur supplémentaire (27) sous forme d'un palpeur de technique d'immersion qui est conçu pour erreurs transversales.

7. Dispositif ultrasonore de vérification selon l'une des revendications 1 à 6, caractérisé par le fait que l'on prévoit un palpeur supplémentaire (27) du moins qui émet des sons à côté de la soudure (28) verticalement dans le matériau de base (30).

8. Dispositif ultrasonore de vérification selon l'une des revendications 1 à 7, caractérisé par le fait que des chambres (38) pour une pré-course d'eau (34) sont associées à chacun des palpeurs (22 - 27) et que ces chambres (38) communiquent entre elles.

9. Dispositif ultrasonore de vérification selon la revendication 8, caractérisé par le fait que les chambres (38) sont reliées à une conduite d'amenée commune pour un fluide de couplage.

10. Dispositif ultrasonore de vérification selon l'une des revendications 1 à 9, caractérisé par le fait que les chambres (38) sont entourées latéralement de patins de glissement (40) destinés à réduire la perte d'eau latérale.

11. Dispositif ultrasonore de vérification selon l'une des revendications 1 à 10, caractérisé par le fait que les palpeurs (22 - 27) peuvent être opérés facultativement en tant que palpeurs émetteurs ou comme palpeurs récepteurs.

12. Dispositif ultrasonore de vérification selon l'une des revendications 1 à 11, caractérisé par le fait qu'un réflecteur indiqué par le palpeur (22) pour ondes de surface n'est pris en considération pour l'évaluation que lorsque le palpeur (23) émettant des sons au travers de la couche de racine (32) ou une autre combinaison de palpeurs fournit lui ou bien elle aussi un signal.
